Europäisches Patentamt

European Patent Office

Office européen des brevets

(11) Numéro de publication: **0 285 731**
**A1**

## DEMANDE DE BREVET EUROPEEN

(21) Numéro de dépôt: 87400804.8

(51) Int. Cl.4 **F24D 11/02**

(22) Date de dépôt: 09.04.87

(43) Date de publication de la demande:
**12.10.88 Bulletin 88/41**

(84) Etats contractants désignés:
**AT BE CH DE ES FR GB GR IT LI LU NL SE**

(71) Demandeur: CHEVALIER, Gilbert
46, rue du Château
F-59283 Raimbeaucourt(FR)

(72) Inventeur: CHEVALIER, Gilbert
46, rue du Château
F-59283 Raimbeaucourt(FR)

(74) Mandataire: Ecrepont, Robert
Cabinet Ecrepont 12 Place Simon Vollant
(Porte de Paris)
F-59800 Lille(FR)

(54) **Procédé et installation de chauffage central.**

(57) L'invention se rapporte à un procédé et à une installation de chauffage central d'un ensemble par ailleurs équipé d'au moins une machine thermodynamique.

Le procédé est caractérisée en ce que :
- dès que dans le réservoir (5b) relié au condenseur (3) la température du fluide caloporteur (4) atteint un certain seuil, par exemple de quarante degrés, on isole du réseau d'échangeurs (9) le départ (11) de la chaudière, puis,
- dès que dans le réservoir (5b) relié au condenseur (3) la température du fluide caloporteur descend au dessous d'un certain seuil, par exemple de quarante degrés :
. on met en marche la chaudière auxiliaire (10),
. on raccorde sa conduite de départ (11) au circuit (8) alimentant les échangeurs (9) sans pour autant nécessairement isoler la conduite du réservoir (5b) relié au condenseur (3) mais bien au contraire on autorise le mélange du fluide calaporteur issu du réservoir (5b) relié au condenseur (3) au fluide issu de la chaudière (10) en modulant le débit de chacun des fluides en fonction de la température requise sensiblement au niveau des échangeurs (9).

## PROCEDE ET INSTALLATION DE CHAUFFAGE CENTRAL

L'invention se rapporte à un procédé et à une installation de chauffage central d'un ensemble par ailleurs équipé d'au moins une machine thermodynamique telle une pompe à chaleur ou une machine frigorifique.

Ce procédé et cette installation s'appliquent de manière connue (EP-0081534)à la récupération de la chaleur sur le circuit de condensation d'une machine thermodynamique, telle une pompe à chaleur, mais aussi et surtout sur le circuit de condensation d'une machine frigorifique dont la marche et l'arrêt restent, quant à eux, indépendants de la marche ou de l'arrêt de la chaudière et du chauffage en général pour ne dépendre que des besoins de froid.

L'échangeur récupérant la chaleur du condenseur et la chaudière disposent chacun de leur propre réservoir accumulateur ou ballon d'eau chaude.

Selon ce procédé connu, pendant la période de chauffage, sans se préoccuper de l'état de marche ou d'arrêt de la machine thermodynamique :

- dès que, dans le ballon relié au condenseur, la température du fluide caloporteur atteint un certain seuil, par exemple de quarante degrés, on isole du circuit alimentant le réseau d'échangeurs tels des radiateurs, le ballon associé à la chaudière et on connecte ce circuit au ballon relié au condenseur et inversement,

- dès que dans le ballon relié au condenseur, la température du fluide caloporteur descend au dessous d'un certain seuil, par exemple de quarante degrés, on isole du circuit alimentant les échangeurs le ballon relié au condenseur et on met en marche la chaudière que l'on raccorde au dit circuit alimentant les échangeurs.

Dans ce procédé connu, cette isolation des deux ballons a évidemment pour but d'éviter que les fluides des deux ballons se mélangent et que se poursuive un prélèvement du fluide du ballon relié au condenseur après que celui-ci soit tombé à une température inférieure au seuil fixé ce qui accentuerait son refroidissement et altérerait le fonctionnement du condenseur et donc de la machine thermodynamique.

Pour raccorder ou isoler la chaudière et le circuit alimentant le réseau d'échangeurs, tant sur la conduite de départ que la conduite de retour du ballon associé à la chaudière est prévu une vanne commandée tandis que pour raccorder ou isoler le ballon relié au condenseur et ce réseau d'échangeurs, sur le circuit de retour du réseau d'échangeurs une autre vanne est montée en parallèle à celle contrôlant le retour au ballon associé à la chaudière.

Cette installation donne de bons résultats mais les actions en tout ou rien sur les vannes d'isolation ne permettent pas de récupérer le maximum de la chaleur disponible au condenseur.

Dans cette installation de type connu, où les ballons sont indépendants, chacun d'eux doit avoir un volume proportionné à la quantité de calories qu'à lui seul il doit délivrer au réseau d'échangeurs.

Ces ballons sont donc encombrants et coûteux.

Un résultat que l'invention vise à obtenir est un procédé et une installation qui, même lorsqu'elle délivre une grande quantité de calories à l'installation de chauffage, permet de récupérer le maximum de chaleur disponible au condenseur. tout en préservant le rendement de la machine thermodynamique.

Un autre résultat de l'invention est une installation qui n'est pas encombrante ni coûteuse.

A cet effet, la présente invention a pour objet un procédé notamment caractérisé en ce que :

- dès que dans le réservoir relié au condenseur la température du fluide caloporteur atteint un certain seuil, par exemple de quarante degrés, on isole du réseau d'échangeurs le départ de la chaudière, puis,

- dès que dans le réservoir relié au condenseur la température du fluide caloporteur descend au dessous d'un certain seuil, par exemple de quarante degrés :

. on met en marche la chaudière auxiliaire,

. on raccorde sa conduite de départ au circuit alimentant les échangeurs sans pour autant nécessairement isoler la conduite du réservoir relié au condenseur mais bien au contraire on autorise le mélange du fluide calaporteur issu du réservoir relié au condenseur au fluide issu de la chaudière en modulant le débit de chacun des fluides en fonction de la température requise sensiblement au niveau des échangeurs.

L'invention a également pour objet l'installation de chauffage mettant en oeuvre ce procédé.

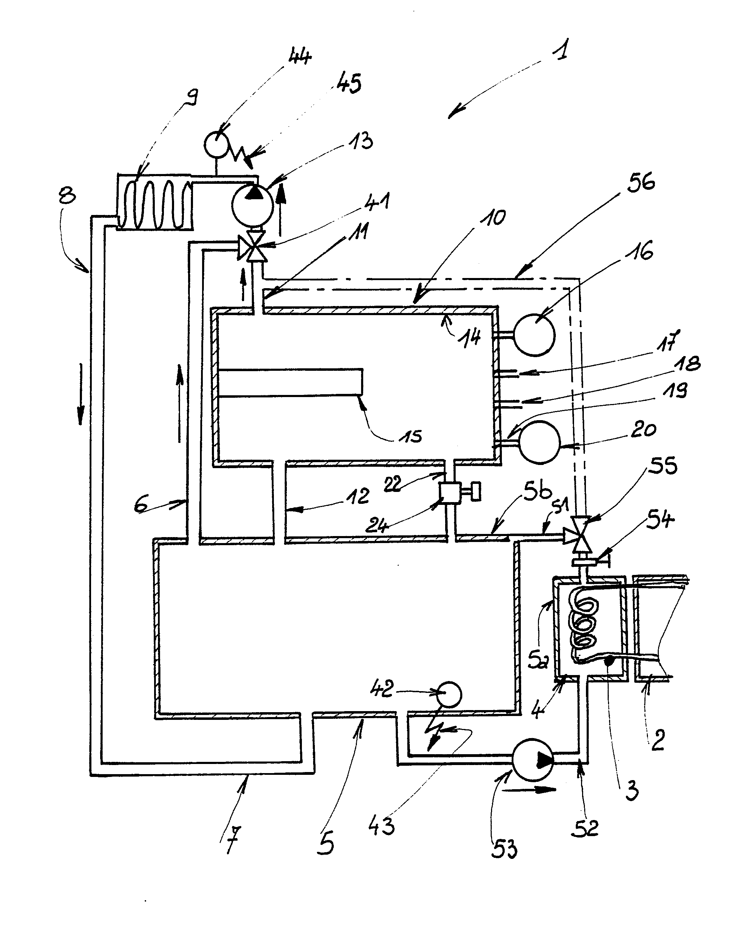

Elle sera bien comprise à l'aide de la description ci-après faite à titre d'exemple non limitatif, en regard du dessin ci-annexé qui représente - schématiquement une installation conforme à un mode préféré de réalisation de l'invention.

En se reportant au dessin, on voit que l'installation 1 est combinée à au moins une machine thermodynamique 2, telle une machine frigorifique dont est représenté le circuit 3 dans lequel circule le frigorigène à l'état gazeux dont la condensation dégagera la chaleur.

Afin de provoquer la condensation, le circuit 3 du frigorigène est refroidi extérieurement par un agent de refroidissement 4 qui, en échange, absorbe la chaleur ainsi dégagée.

De manière connue, l'agent de refroidissement est un fluide caloporteur tel de l'eau amené en condition d'échange avec le circuit 3 du frigorigène afin de récupérer et d'accumuler la chaleur qu'il dégage.

A cet effet, le circuit plonge dans ce dluide caloporteur 4 qui s'accumule dans un réservoir ou ballon.

Selon une caractéristique de l'invention, afin d'optimiser l'échange, le réservoir 5 est scindé en au moins un réservoir 5a d'échange, de faible dimension, et un ballon d'accumulation 5b reliés entre eux par des conduites 51 et 52, l'une (51) envoyant le fluide réchauffé vers le ballon 5b, l'autre (52) reprenant le fluide du ballon 5b pour le réchauffer.

A cet effet, sur la conduite de reprise 52 est intercalée une pompe de circulation 53.

Sur la conduite 51 de sortie du fluide réchauffé, est intercalée une vanne d'isolation 54.

Au ballon d'accumulation 5b, sont raccordées des conduites de départ 6 et de retour 7 d'un circuit 8 alimentant un réseau d'échangeurs 9, tels des radiateurs.

Sur ce circuit, est intercalée une pompe 13 commandant la circulation du fluide caloporteur dans les dits échangeurs 9.

Dans une variante de réalisation, la conduite 51 envoyant le fluide réchauffé du réservoir échangeur 5a à l'accumulateur 5b porte en outre une vanne trois voies 55 permettant de court-circuiter le ballon 5b et, par une conduite 56, d'envoyer directement le fluide réchauffé à l'entrée du réseau d'échangeurs 9.

L'installation comprend en outre, de manière connue, une chaudière auxiliaire apte à fournir au réseau d'échangeurs 9 le fluide caloporteur nécessaire.

A cet effet, ses circuits de départ 11 et de retour 12 sont raccordés au circuit 8 alimentant le réseau d'échangeurs.

La chaudière auxiliaire 10 peut être de tout type connu et par exemple consister en une chaudière électrique formée d'un ballon ou réservoir d'accumulation 14 dans lequel pénètre au moins un élément thermoplongeur 15.

En outre, cette chaudière auxiliaire 10 comprend évidemment des organes de contrôle et de sécurité, tels un aquastat 16, un départ 17 vers un vase d'expansion (non représenté), un raccord 18 pour une soupape de sûreté (non représentée) et un raccord 19 pour un manomètre 20.

Selon une caractéristique de l'invention, le retour 12 vers le ballon 14 de la chaudière est relié au retour 7 du réseau d'échangeurs 9 par l'intermédiaire du ballon 5b relié au condenseur 3.

Ce circuit de retour 7 + 12 est constamment ouvert.

Pour des commodités de remplissage et de vidange entre le ballon 14 de la chaudière auxiliaire 10 et le ballon 5b relié au condenseur peut être prévue de manière connue au moins une autre conduite pouvant être contrôlée par au moins une vanne 24 qui en période de chauffage peut être fermée.

Selon l'invention, les conduites de départ 6, 11 respectivement du ballon 5b relié au condenseur 3 et de celui 14 de la chaudière 10 sont reliées à l'entrée du circuit 8 du réseau d'échangeurs 9 par le biais d'une vanne commandée 41 telle notamment une vanne à trois voies, laquelle est pilotée :

- d'une part, au moins par un premier capteur de température 42 du fluide caloporteur contenu dans le ballon 5b relié au condenseur 3 et qui, lorsque la température est supérieure à un certain seuil par exemple de quarante degrés, délivre à cette vanne commandée 41 un signal 43 pour que celle-ci isole du circuit 8 la conduite 11 venant du ballon 14 de la chaudière 10 et raccorde au circuit 8 la conduite venant du réservoir 5b relié au condenseur, tandis que, lorsque la température du fluide est inférieure à un certain seuil, par exemple, de quarante degrés, ce même capteur 42 envoie à la vanne commandée 41 un signal déterminant son fonctionnement en vanne mélangeuse et,

- d'autre part, au moins par un second capteur 44 de la température du liquide caloporteur, sensiblement en amont des échangeurs 9, qui délivre à la vanne commandée 41 un signal 45 pour doser le prélèvement des fluides issus des conduites 11 et 6 du ballon 5b relié au condenseur et du réservoir 14 de la chaudière 10 pour les mélanger selon des proportions variant avec la température requise sensiblement au niveau des échangeurs 9.

Avec cette installation, sans se préoccuper de l'état de marche ou d'arrêt de la machine thermodynamique, le procédé de chauffage se déroule comme suit :

- dès que dans le réservoir 5b relié au condenseur 3 la température du fluide caloporteur 4 atteint un certain seuil, par exemple de quarante degrés, on isole du réseau d'échangeurs 9 le départ 11 de la chaudière, puis,

- dès que dans le réservoir 5b relié au condenseur 3 la température du fluide caloporteur descend au dessous d'un certain seuil, par exemple de quarante degrés :

. on met en marche la chaudière auxiliaire 10,

. on raccorde sa conduite de départ 11 au circuit 8 alimentant les échangeurs 9 sans pour autant nécessairement isoler la conduite du réservoir 5b relié au condenseur 3 mais bien au contraire on autorise le mélange du fluide calaporteur issu du réservoir 5b relié au condenseur 3 au fluide issu de la chaudière 10 en modulant le débit de chacun des fluides en fonction de la température requise sensiblement au niveau des échangeurs 9.

Grâce à ce procédé, dans lequel la machine thermodynamique peut toujours poursuivre son action, priorité est donnée à la récupération de la chaleur dans le réservoir 5b relié au condenseur 3.

Dans le réservoir 14 de la chaudière auxiliaire 10 peut évidemment également plonger un ballon empli d'eau qui, après chauffage, est destinée à être distribuée notamment dans les installations sanitaires.

Ne serait-ce qu'afin de faciliter le dégivrage périodique de l'évaporateur de la machine thermodynamique, dégivrage pour lequel le cycle de fonctionnement de la machine thermodynamique est généralement inversé, dans le réservoir 5a d'échange et/ou 5b d'accumulation pourra également être prévue une source de chauffage, telle une électrode.

Tous ces éléments sont connus et non pas été représentés, l'homme de l'art étant à même de choisir ces éléments , leur position, etc ...

On remarque que, comme dans le procédé antérieurement connu (EP 0081534) en dehors des périodes de chauffage, et donc lorsque la pompe 13 ne commande plus la circulation de fluide caloporteur dans le circuit 8 qui alimentait les échangeurs, lorsque seule l'eau chaude sanitaire est nécessaire, on peut ouvrir les conduites de communication 22 prévues entre le réservoir 14 de la chaudière auxiliaire 10 et le réservoir 5b relié au condenseur pour que, par effet, de thermosyphon, l'eau circule d'un réservoir 5b à l'autre 14 pour chauffer le ballon d'eau sanitaire.

En période de chauffage par récupération, ces communications ont de plus l'avantage d'ajouter l'un à l'autre le volume des réservoirs et donc d'augmenter la réserve d'eau chaude sans augmenter le volume des réservoirs ni donc leur coût.

## Revendications

1. Procédé de chauffage central d'un ensemble par ailleurs équipé d'au moins une machine thermodynamique afin de récupérérer de la chaleur sur le circuit de condensation d'une machine thermodynamique, telle une pompe à chaleur, mais aussi et surtout sur le circuit de condensation d'une machine frigorifique dont la marche et l'arrêt restent, quant à eux, indépendants de la marche ou de l'arrêt de la chaudière et du chauffage en général pour ne dépendre que des besoins de froid et de stocker cette chaleur dans des ballons (5b, 14) d'accumulation, l'un (5b) relié au condenseur (3), l'autre (14) appartenant à la chaudière (10) auxquels ballons (5b, 14) sont raccordées des conduites de départ (6, 11) et retour (7, 12) reliées à un circuit (8) d'échangeurs (9) tels des radiateurs, ce procédé étant **CARACTERISE** en ce que :
- dès que dans le réservoir (5b) relié au condenseur (3) la température du fluide caloporteur (4) atteint un certain seuil, par exemple de quarante degrés, on isole du réseau d'échangeurs (9) le départ (11) de la chaudière, puis,
- dès que dans le réservoir (5b) relié au condenseur (3) la température du fluide caloporteur descend au dessous d'un certain seuil, par exemple de quarante degrés :
. on met en marche la chaudière auxiliaire (10),
. on raccorde sa conduite de départ (11) au circuit (8) alimentant les échangeurs (9) sans pour autant nécessairement isoler la conduite du réservoir (5b) relié au condenseur (3) mais bien au contraire on autorise le mélange du fluide calaporteur issu du réservoir (5b) relié au condenseur (3) au fluide issu de la chaudière (10) en modulant le débit de chacun des fluides en fonction de la température requise sensiblement au niveau des échangeurs (9).

2. Installation de chauffage central d'un ensemble par ailleurs équipé d'au moins une machine thermodynamique afin de récupérérer de la chaleur sur le circuit de condensation d'une machine themodynamique, telle une pompe à chaleur, mais aussi et surtout sur le circuit de condensation d'une machine frigorifique dont la marche et l'arrêt restent, quant à eux, indépendants de la marche ou de l'arrêt de la chaudière et du chauffage en général pour ne dépendre que des besoins de froid, cette installation étant **CARACTERISEE** en ce que les conduites de départ (6, 11) respectivement du ballon (5b) relié au condenseur (3) et de celui (14) de la chaudière (10) sont reliées à l'entrée du circuit (8) du réseau d'échangeurs (9) par le biais d'une vanne commandée (41) telle notamment une vanne à trois voies.

3. Installation selon la revendication 2 caractérisée en ce qu'elle est pilotée :
- d'une part, au moins par un premier capteur de température (42) du fluide caloporteur contenu dans le ballon (5b) relié au condenseur (3) et qui, lorsque la température est supérieure à un certain seuil par exemple de quarante degrés, délivre à cette vanne commandée (41) un signal (43) pour que celle-ci isole du circuit (8) la conduite (11) venant du ballon (14) de la chaudière (10) et raccorde au circuit (8) la conduite venant du réservoir (5b) relié au condenseur, tandis que, lorsque la température du fluide est inférieure à un certain seuil, par exemple, de quarante degrés, ce même capteur (42) envoie à la vanne commandée (41) un signal déterminant son fonctionnement en vanne mélangeuse et,
- d'autre part, au moins par un second capteur

(44) de la température du liquide caloporteur, sensiblement en amont des échangeurs (9), qui délivre à la vanne commandée (41) un signal (45) pour doser le prélèvement des fluides issus des conduites (11 et 6) du ballon (5b) relié au condenseur et du réservoir (14) de la chaudière (10) pour les mélanger selon des proportions variant avec la température requise sensiblement au niveau des échangeurs (9).

4. Installation selon la revendication 2 caractérisée en ce que le retour (12) vers le ballon (14) de la chaudière est relié au retour (7) du réseau d'échangeurs (9) par l'intermédiaire du ballon (5b) relié au condenseur (3).

5. Installation selon l'une quelconque des revendications 2 à 4 caractérisée en ce qu'afin d'optimiser l'échange, le réservoir (5) est scindé en au moins un réservoir (5a) d'échange, de faible dimension, et un ballon d'accumulation (5b) reliés entre eux par des conduites (51 et 52), l'une (51) envoyant le fluide réchauffé vers le ballon (5b), l'autre (52) reprenant le fluide du ballon (5b) pour le réchauffer.

6. Installation selon la revendication 5 caractérisée en ce que, sur la conduite de reprise (52), est intercalée une pompe de circulation (53) et sur la conduite (51) de sortie du fluide réchauffé, est intercalée une vanne d'isolation (54).

7. Installation selon la revendication 5 caractérisée en ce que la conduite (51) envoyant le fluide réchauffé du réservoir échangeur (5a) à l'accumulateur (5b) porte en outre une vanne trois voies (55) permettant de court-circuiter le ballon (5b) et d'envoyer directement le fluide réchauffé à l'entrée du réseau d'échangeurs (9).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | WO-A-8 300 063 (CHEVALIER) <br> --- | | F 24 D 11/02 |
| A | EP-A-0 151 460 (GEBRÜDER SULZER AG) <br> * Abrégé * <br> ----- | 1,2,4-6 | |

DOMAINES TECHNIQUES RECHERCHES (Int. Cl.4)

F 24 D

Le présent rapport a été établi pour toutes les revendications

| Lieu de la recherche | Date d'achèvement de la recherche | Examinateur |
|---|---|---|
| LA HAYE | 02-12-1987 | VAN GESTEL H.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                
& : membre de la même famille, document correspondant

EPO FORM 1503 03.82 (P0402)